# DEMANDE DE BREVET EUROPEEN

(11) **EP 4 546 715 A1**
(43) Date de publication de la demande: **30.04.2025**
(21) Numéro de dépôt: 24207061.3
(22) Date de dépôt: 16.10.2024
(51) Int. Cl.: H04L 9/40, G06F 3/06, H04L 9/08, H04L 67/1097, H04L 67/12, H04W 12/04

(54) **PROCEDE DE STOCKAGE**

(30) Priorité: 25.10.2023 FR 2311617
(71) Demandeur: STMicroelectronics International N.V., 1228 Plan-les-Ouates, Geneva (CH)
(72) Inventeur: TABARIES, Laurent, 13400 AUBAGNE (FR)
(74) Mandataire: Cabinet Beaumont

(57) **Abrégé**

La présente description concerne un procédé de stockage d'une donnée (102) dans un système électronique (100) comprenant au moins deux éléments sécurisés (104-1, ..., 104-N), comprenant les étapes successives suivantes :
- diviser ladite donnée (102) en au moins deux parties ; et
- répartir et stocker chacune desdites au moins deux parties dans un desdits au moins deux éléments sécurisés (104-1, ..., 104-N) .

## Description

### Domaine technique

La présente description concerne de façon générale les systèmes et dispositifs électroniques. Plus particulièrement, la présente description se rapporte au stockage de données sensibles dans un système électronique.

### Technique antérieure

De nos jours, beaucoup de systèmes et dispositifs électroniques utilisent des données sensibles, et notamment des clés de chiffrement et/ou de déchiffrement ou des clés applicatives, et ont, pour ce faire, parfois besoin de les stocker. Il peut être important de stocker ces données de manière sécurisée.

Il serait souhaitable de pouvoir améliorer, au moins en partie, certains aspects du stockage de données sensibles dans un système électronique.

### Résumé de l'invention

Il existe un besoin pour un stockage de données sensibles dans un système électronique plus sécurisé.

Il existe un besoin pour des systèmes électroniques stockant des données sensibles de façon plus sécurisée.

Un mode de réalisation pallie tout ou partie des inconvénients des procédés connus de stockage de données sensibles dans un système électronique.

Un mode de réalisation pallie tout ou partie des inconvénients des systèmes électroniques connus stockant des données sensibles de façon sécurisée.

Un mode de réalisation prévoit un procédé de stockage d'une donnée sensible dans un système électronique utilisant plusieurs éléments sécurisés.

Un mode de réalisation prévoit un système électronique stockant une donnée sensible en la répartissant dans plusieurs éléments sécurisés.

Un mode de réalisation prévoit un procédé de stockage d'une donnée dans un système électronique comprenant au moins deux éléments sécurisés, comprenant les étapes successives suivantes :
- diviser ladite donnée en au moins deux parties ; et
- répartir et stocker chacune desdites au moins deux parties dans un desdits au moins deux éléments sécurisés.

Un autre mode de réalisation prévoit un système électronique, comprenant au moins deux éléments sécurisés, et adapté à stocker une donnée en suivant les étapes successives suivantes :
- diviser ladite donnée en au moins deux parties ; et
- répartir et stocker chacune desdites au moins deux parties dans un desdits au moins deux éléments sécurisés.

Selon un mode de réalisation, la répartition desdites au moins deux parties dans lesdits au moins deux éléments sécurisés est consignée dans une ligne, ou une colonne, d'une table de correspondance.

Selon un mode de réalisation, la table de correspondance est stockée dans un unique emplacement du système accessible à chacun desdits au moins deux éléments sécurisés.

Selon un mode de réalisation, une copie de la table de correspondance est stockée dans chacun desdits au moins deux éléments sécurisés.

Selon un mode de réalisation, la répartition est différente pour chaque donnée stockée dans ledit système.

Selon un mode de réalisation, ladite répartition est choisie en choisissant une ligne de ladite table de correspondance.

Selon un mode de réalisation, le choix de ladite ligne de ladite table de correspondance est effectué en utilisant un compteur.

Selon un mode de réalisation, chacun desdits au moins deux éléments sécurisés est compris dans au moins un domaine de fonctionnement dudit système.

Selon un mode de réalisation, chaque au moins un domaine de fonctionnement comprend, en outre, au moins un dispositif électronique.

Selon un mode de réalisation, lesdits au moins deux éléments sécurisés sont des éléments sécurisés embarqués.

Selon un mode de réalisation, ladite donnée est une clé applicative.

Selon un mode de réalisation, ledit système est un véhicule automobile.

Selon un mode de réalisation, le procédé comprend les étapes successives suivantes :
- récupérer lesdites au moins deux parties de ladite donnée stockées dans lesdits au moins deux éléments sécurisés ;
- former ladite donnée en utilisant lesdites au moins deux parties.

Selon un mode de réalisation, la formation de ladite donnée est réalisée en utilisant ladite table de correspondance.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un système électronique ; et
la figure 2 représente deux schémas blocs illustrant un mode de mise en oeuvre d'un procédé de stockage et d'un procédé de récupération d'une donnée stockée dans le système électronique de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas" , "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après concernent le stockage d'une donnée, et plus particulièrement d'une donnée secrète ou sensible, dans un dispositif électronique comprenant plusieurs, au moins deux, éléments sécurisés.

On appelle ci-après "sensible" ou "secrète" une donnée représentant une information sensible et/ou secrète dont le contenu n'est pas destiné à être public.

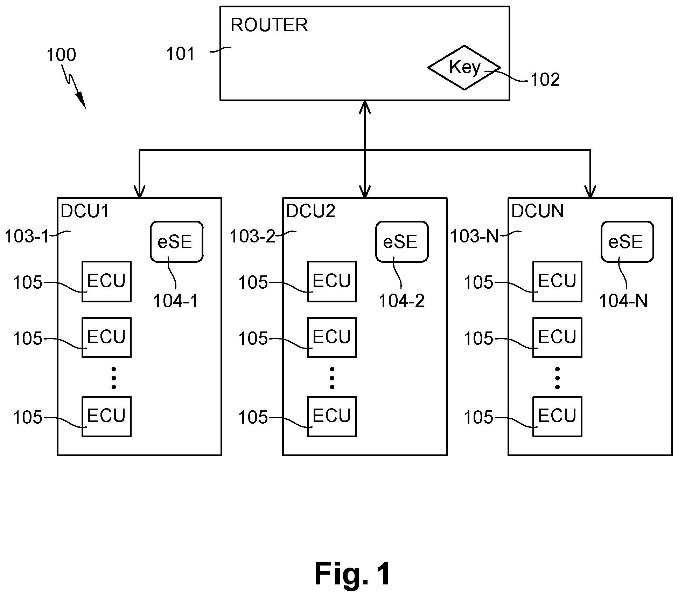

La figure 1 représente, très schématiquement et sous forme de blocs, un mode de réalisation d'un système 100 adapté à stocker une ou plusieurs données sensibles et/ou secrètes de manière sécurisée.

Le système 100 est un système électronique complexe du type d'un ordinateur, ou d'un système électronique d'un véhicule automobile.

Le système 100 comprend un routeur 101 (ROUTER) adapté à recevoir et transmettre des données. Selon un exemple, le routeur 101 est un module de communication par internet, comme un module ayant accès au réseau de téléphonie mobile de cinquième génération (5G), ou un module ayant accès à internet grâce à un protocole de communication sans fil de type Wi-Fi. Le routeur 101 est donc adapté à recevoir et à transmettre des données au sein du système 100, mais aussi avec un ou plusieurs autres systèmes électroniques externes au système 100.

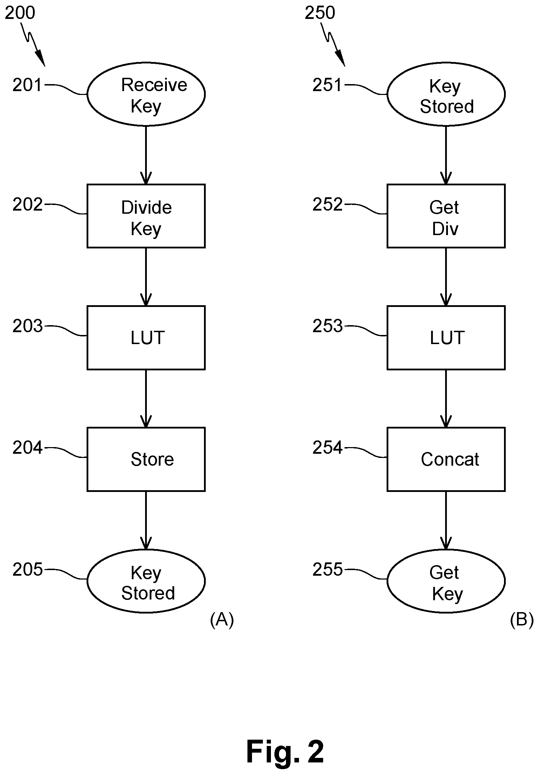

Selon un mode de réalisation, le routeur 101 est tout particulièrement adapté à recevoir une ou plusieurs données 102 (Key) à stocker dans le système 100. La ou les données 102 sont, par exemple, des données sensibles et/ou secrètes. Selon un mode de réalisation, la ou les données 102 sont des clés de chiffrement et/ou de déchiffrement, ou des clés applicatives. On appelle ici "clé applicative" une donnée permettant de rendre accessible une ou plusieurs fonctionnalités et/ou un ou plusieurs ensembles de données d'un système électronique. Un mode de mise en oeuvre d'un procédé de stockage sécurisé de la donnée 102 et un mode de mise en oeuvre d'un procédé de récupération d'une telle donnée stockée sont décrits en relation avec la figure 2.

Le système 100 est adapté à mettre en oeuvre une multitude de fonctionnalités qui sont regroupées en plusieurs domaines de fonctionnement. Dans l'exemple illustré en figure 1, le système comprend N domaines de fonctionnement 103-1 (DCU1), 103-2 (DCU2), ... et 103-N (DCUN), N étant un entier supérieur ou égal à deux. Chaque domaine fonctionnement 103-i, i étant un entier variant de 1 à N, comprend au moins un élément sécurisé 104-i et un ou plusieurs, généralement plusieurs, dispositifs électroniques 105 (CPU) chacun adapté à mettre en oeuvre une ou plusieurs fonctionnalités.

Selon un exemple pratique, si le système 100 est un véhicule automobile, un premier domaine de fonctionnement peut concerner le domaine du moteur, et comprendre les dispositifs électroniques gérant, par exemple, l'injection, les modes de fonctionnement du moteur, les capteurs permettant de surveiller le bon fonctionnement et/ou l'usure du moteur, etc. Un deuxième domaine de fonctionnement peut concerner la sécurité au sein du véhicule, et comprendre les dispositifs électroniques gérant, par exemple, la pression des pneus, les freins, les appels d'urgence, etc. Un troisième domaine de fonctionnement peut concerner l'habitacle du véhicule, et comprendre les dispositifs électroniques gérant, par exemple, l'air conditionné, le chauffage, l'éclairage, etc. Un quatrième domaine de fonctionnement peut concerner le contenu multimédia du véhicule, et comprendre les dispositifs électroniques gérant, par exemple, une radio ou un autoradio, un système de sonorisation, un ou plusieurs écrans, etc.

Chaque élément sécurisé 104-i comprend un ou plusieurs moyens de stockage, comme un registre ou une mémoire, permettant de conserver des données de manière sécurisé. En particulier, chaque élément sécurisé 104-i est résistant face à une attaque par canaux cachés (side channels attack). Selon un exemple, tout ou partie des éléments sécurisé 104-1 à 104-N sont des éléments sécurisés embarqués.

La figure 2 comprend deux schémas-bloc (A) et (B) illustrant un mode de mise en oeuvre d'un stockage d'une donnée dans le système 100 décrit en relation avec la figure 1. Plus particulièrement, le schéma (A) représente un mode de mise en oeuvre d'un procédé de stockage 200 d'une donnée dans le système 100, et le schéma (B) représente un mode de mise en oeuvre d'un procédé de récupération 250 d'une donnée déjà stockée dans le système 100.

Lorsque le système 100 a besoin de stocker de manière sécurisé une donnée du type de la donnée 102, le procédé 200 est exécuté.

A une étape initiale 201 (Receive Key), le système 100 reçoit une donnée Key à stocker, par exemple du type de la donnée 102 décrite précédemment.

A une étape 202 (Divide Key), postérieure à l'étape initiale 201, la donnée Key est divisée en plusieurs données appelées ci-après parties de la donnée Key. Pour cela, la donnée Key est divisée, scindée, segmentée ou fractionnée en plusieurs parties. Plus particulièrement, la donnée Key est divisée par exemple en M parties, M étant un entier supérieur ou égal à deux. Selon un exemple, M est le nombre d'élément sécurisé 104-1 à 104-N compris dans le système 100. Selon un mode de réalisation, M est inférieur ou égal à N. Selon un mode de réalisation préféré, M est égal à N.

Selon un exemple, lorsque le système 100 est utilisé pour stocker plusieurs données, par exemple plusieurs clés du type de la clé Key, différentes alors il est possible que, à l'étape 202, chaque donnée soit divisée en un nombre différent de parties.

A une étape 203 (LUT), postérieure à l'étape 202, une table de correspondance (Look Up Table, LUT) est utilisée pour préparer le stockage des parties Key1 à KeyM dans le système. Selon un mode de réalisation, chaque partie Keyj, j étant un entier compris entre 1 et M, est stockée dans un élément sécurisé 104-i. Selon un mode de réalisation, la répartition des parties Key1 à KeyM dans les éléments 104-1 à 104-N est consignée dans une table de correspondance. Selon un premier exemple, la répartition des parties Key1 à KeyM peut être définie par la table de correspondance. Dans le cas de ce premier exemple, la table de correspondance peut, par exemple, comprendre l'ensemble des combinaisons possibles de répartition des parties Key1 à KeyM dans les éléments sécurisés 104-1 à 104-N dont le nombre N varie entre 2 et M. Selon un deuxième exemple, la répartition des parties Key1 à KeyM peut être définie de façon antérieure puis être consignée dans la table de correspondance. Dans le cas de ce deuxième exemple, la répartition des parties Key1 à KeyM peut être définie de manière aléatoire.

Plus particulièrement, chaque colonne de la table de correspondance correspond à un élément sécurisé 104-i, et une ligne de la table de correspondance comprend l'ordre dans lequel les parties Key1 à KeyM sont stockés dans les éléments sécurisés 104-1 à 104-N. Selon une variante, les lignes et les colonnes de la table de correspondance peuvent être inversées. Selon un mode de réalisation, chaque donnée stockée dans le système comprend une répartition différente de ces parties dans les éléments sécurisés.

Selon un mode de réalisation, la table de correspondance comprend un nombre de lignes fini, et pour chaque donnée à stocker dans le système, une ligne est choisie, par exemple de façon sécurisée.

Selon un exemple, lorsque le système 100 est utilisé pour stocker plusieurs données, il est possible d'utiliser un nombre différent d'éléments sécurisés pour stocker les parties de chaque donnée. Toutes ces informations sont consignées, par exemple, dans la table de correspondance.

De plus, selon un autre exemple, le nombre d'éléments sécurisés utilisés pour le stockage peut varier en fonction des données à stocker mais aussi en fonction de session de fonctionnement du système 100. Plus particulièrement, on définit une session de fonctionnement comme étant une durée d'utilisation finie dans un mode de fonctionnement distinct du système 100, par exemple un mode de fonctionnement sécurisé. A titre d'exemple, pendant une session de fonctionnement ayant un niveau de sécurité supérieure, un plus grand nombre d'éléments sécurisés peut être utilisé.

Selon un mode de réalisation préféré, le système comprend un compteur dont la valeur est adaptée à choisir une ligne dans la table de correspondance. Ce compteur peut être incrémenté à chaque stockage d'une nouvelle donnée. Ainsi, une première donnée peut être stockée en utilisant les informations de la ligne de la table de correspondance dont le numéro est égal à la valeur du compteur. Une fois le stockage terminé, le compteur est incrémenté. Lorsqu'une deuxième donnée doit être stockée, une autre ligne dont le numéro est égal à la valeur incrémentée du compteur est choisie, est stockée en utilisant les informations de la ligne suivante, etc. Le compteur peut être stocké de façon sécurisée dans le système 100.

Changer de répartition des parties de la donnée dans les éléments sécurisés pour chaque donnée permet de rendre le procédé de stockage résistant face aux attaques par canaux cachés. En effet, chaque stockage présente, dans ce cas, une signature électrique différente.

Selon un exemple, la table de correspondance peut être stockée dans le routeur 102, tout en étant accessible à au moins un des éléments sécurisés 104-1 à 104-N, ou à tous les éléments sécurisés 104-1 à 104-N. Selon une variante, chaque élément sécurisé 104-1 à 104-N stocke une copie de la table de correspondance.

A une étape 204 (Store), postérieure à l'étape 203, le stockage de chaque partie Key1 à KeyM dans les éléments sécurisés 104-1 à 104-N est mis en oeuvre.

A une étape 205 (Key Stored), postérieure à l'étape 204, la donnée est stockée de façon sécurisée dans le système 100.

A l'inverse, pour récupérer une donnée stockée dans le système 100 en utilisant le procédé de stockage 200, le procédé 250 est exécuté.

A une étape initiale 251 (Key Stored), la donnée Key a été stockée dans le système 100. Pour cela, la donnée Key a été divisée en M parties Key1 à KeyM, et chacune de ces parties a été stockée dans un élément sécurisé du système 100.

A une étape 252 (Get Div), postérieure à l'étape initiale 251, toutes les parties Key1 à KeyM de la donnée Key sont récupérés dans les différents éléments sécurisés.

A une étape 253 (LUT), postérieure à l'étape 252, la table de correspondance décrite précédemment est utilisée pour déterminer l'ordre dans lequel les parties Key1 à KeyM doivent être réunies. Pour savoir quelle ligne correspond à la donnée Key, la valeur du compteur décrit précédemment peut être utilisée.

A une étape 254 (Concat), postérieure à l'étape 253, les parties Key1 à KeyM sont réunies, par exemple concaténées, pour obtenir la donnée Key.

A une étape 255 (Get Key), postérieure à l'étape 254, la donnée Key a été récupérée et peut être utilisée.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, pour améliorer davantage la sécurité du stockage obtenu par le procédé 200, des étapes de chiffrement et/ou de déchiffrement peuvent être ajoutées.

Enfin, la mise en oeuvre pratique des modes de réalisation et variantes décrits est à la portée de la personne du métier à partir des indications fonctionnelles données ci-dessus.

## Revendications

1. Procédé de stockage (200) d'une donnée (102) dans un système électronique (100) comprenant au moins deux éléments sécurisés (104-1, ..., 104-N), comprenant les étapes successives suivantes :
- diviser (202) ladite donnée (102 ; Key) en au moins deux parties (Key1, ..., KeyM) ; et
- répartir et stocker (204) chacune desdites au moins deux parties (Key1, ..., KeyM) dans un desdits au moins deux éléments sécurisés (104-1, ..., 104-N).

2. Système électronique (100), comprenant au moins deux éléments sécurisés (104-1, ..., 104-N), et adapté à stocker une donnée (102 ; Key) en suivant les étapes successives suivantes :
- diviser (202) ladite donnée (102 ; Key) en au moins deux parties (Key1, ..., KeyM) ; et
- répartir et stocker (204) chacune desdites au moins deux parties (Key1, ..., KeyM) dans un desdits au moins deux éléments sécurisés (104-1, ..., 104-N).

3. Procédé selon la revendication 1, ou dispositif selon la revendication 2, dans lequel la répartition desdites au moins deux parties (Key1, ..., KeyM) dans lesdits au moins deux éléments sécurisés (104-1, ..., 104-N) est consignée dans une ligne, ou une colonne, d'une table de correspondance.

4. Procédé ou dispositif selon la revendication 3, dans lequel la table de correspondance est stockée dans un unique emplacement du système accessible à chacun desdits au moins deux éléments sécurisés (104-1, ..., 104-N).

5. Procédé ou dispositif selon la revendication 3, dans lequel une copie de la table de correspondance est stockée dans chacun desdits au moins deux éléments sécurisés (104-1, ..., 104-N) .

6. Procédé selon l'une quelconque des revendications 1, 3 à 5, ou dispositif selon l'une quelconque des revendications 2 à 5, dans lequel la répartition est différente pour chaque donnée (102 ; Key) stockée dans ledit système.

7. Procédé selon l'une quelconque des revendications 1, 3 à 6, ou dispositif selon l'une quelconque des revendications 2 à 6, dans lequel la répartition varie en fonction d'une session de fonctionnement dudit système (101).

8. Procédé ou dispositif selon la revendication 6 ou 7 dans son rattachement à la revendication 3, dans lequel ladite répartition est choisie en choisissant une ligne de ladite table de correspondance.

9. Procédé ou dispositif selon la revendication8, dans lequel le choix de ladite ligne de ladite table de correspondance est effectué en utilisant un compteur.

10. Procédé selon l'une quelconque des revendications 1, 3 à 9, ou dispositif selon l'une quelconque des revendications 2 à 9, dans lequel chacun desdits au moins deux éléments sécurisés (104-1, ..., 104-N) est compris dans au moins un domaine de fonctionnement dudit système.

11. Procédé ou dispositif selon la revendication 10, dans lequel chaque au moins un domaine de fonctionnement comprend, en outre, au moins un dispositif électronique.

12. Procédé selon l'une quelconque des revendications 1, 3 à 11, ou dispositif selon l'une quelconque des revendications 2 à 11, dans lequel lesdits au moins deux éléments sécurisés (104-1, ..., 104-N) sont des éléments sécurisés embarqués.

13. Procédé selon l'une quelconque des revendications 1, 3 à 12, ou dispositif selon l'une quelconque des revendications 2 à 12, dans lequel ladite donnée (102 ; Key) est une clé applicative.

14. Procédé selon l'une quelconque des revendications 1, 3 à 13, ou dispositif selon l'une quelconque des revendications 2 à 13, dans lequel ledit système est un véhicule automobile.

15. Procédé de récupération (250) d'une donnée (102 ; Key) stockée en utilisant le procédé selon l'une quelconque des revendications 1, 3 à 14, comprenant les étapes successives suivantes :
- récupérer lesdites au moins deux parties (Key1, ..., KeyM) de ladite donnée (102 ; Key) stockées dans lesdits au moins deux éléments sécurisés (104-1, ..., 104-N) ;
- former ladite donnée (102 ; Key) en utilisant lesdites au moins deux parties (Key1, ..., KeyM).

16. Procédé selon la revendication 15, dans lequel la formation de ladite donnée (102 ; Key) est réalisée en utilisant ladite table de correspondance.
